# EUROPÄISCHE PATENTSCHRIFT

(11) **EP 1 178 911 B1**
(45) Veröffentlichungstag und Bekanntmachung des Hinweises auf die Patenterteilung: **02.04.2003**
(21) Anmeldenummer: 00934988.7
(22) Anmeldetag: 06.05.2000
(51) Int. Cl.: B62D 5/083

(54) **DREHSCHIEBERVENTIL FÜR HILFSKRAFTLENKUNGEN VON KRAFTFAHRZEUGEN**
ROTARY SHIFT VALVE FOR SERVO-ASSISTED STEERING SYSTEMS OF MOTOR VEHICLES
SOUPAPE A TIROIR ROTATIF POUR SYSTEMES DE DIRECTION ASSISTEE DE VEHICULES A MOTEUR

(30) Priorität: 11.05.1999 DE 19921745
(43) Veröffentlichungstag der Anmeldung: 13.02.2002
(73) Patentinhaber: ZF Lenksysteme GmbH, 73527 Schwäbisch Gmünd (DE)
(72) Erfinder: BREITWEG, Werner, D-73529 Bargau (DE); SCHÄNZEL, Rainer, D-73457 Essingen (DE)
(86) Internationale Anmeldenummer: EP0004072
(87) Internationale Veröffentlichungsnummer: WO00068061

(56) Entgegenhaltungen:
- DE-A- 4 310 396

## Beschreibung

Die Erfindung betrifft ein Drehschieberventil für Hilfskraftlenkungen von Kraftfahrzeugen nach der im Oberbegriff von Anspruch 1 näher definierten Art.

Drehschieberventile für Hilfskraftlenkungen enthalten normalerweise zwei Ventilelemente, die koaxial ineinander beweglich angeordnet und zum Erzielen eines Steuerweges begrenzt zueinander verdrehbar angeordnet sind.
Dabei ist ein erstes Ventilelement, das mit einem Ventil-Eingangsglied verbunden ist, als radial außenliegender Drehschieber ausgebildet. Ein zweites Ventilelement ist mit einem als Antriebsritzel ausgebildeten Ventil-Ausgangsglied drehfest verbunden und als radial innenliegende Steuerbuchse ausgebildet. Der Drehschieber ist zusätzlich über einen einen Steuerweg begrenzende Totgangkupplung mit dem Antriebsritzel verbunden. Beide Ventilelemente weisen Steuerlängsnuten auf, die wenigstens zu einem Teil in ihrer axialen Erstreckung begrenzt sind und zur Steuerung eines Druckmittels von oder zu Arbeitsräumen eines Servomotors dienen.
Zur Rückstellung der beiden Ventilelemente aus einer ausgelenkten Stellung in ihre Neutralstellung dient eine Drehstabfeder.

Bei den bekannten Drehschieberventilen wird die Steuerbuchse in einen, in das Antriebsritzel eingepressten, Einhängestift eingehängt. Für diesen Montageschritt ist ein Spiel in der Einhängeverbindung zwischen Einhängestift und Steuerbuchse erforderlich. Durch das vorhandene Spiel kann es nun aber zu einer Relativbewegung zwischen dem Drehschieber und der Steuerbuchse kommen, ohne daß von einem Lenkhandrad ein Lenkmoment eingeleitet worden ist. Dies hat unerwünschte Ölströme zu den Arbeitsräumen des Servomotors zur Folge. Diese unerwünschten Ölströme machen sich zusätzlich durch Lenkmomentsprünge am Lenkhandrad bemerkbar, die Selbstlenkeffekte zur Folge haben und somit beim Fahrer zu einem Unsicherheitsgefühl führen können.

In den bisher beschriebenen Ausführungsbeispielen ist der Drehschieber fest mit dem Ventil-Eingangsglied und die Steuerbuchse mit dem Ventil-Ausgangsglied verbunden. Es gibt aber auch Drehschieberventile, die mit umgekehrt zugeordneten Ventilelementen arbeiten. Für diese Drehschieberventile kann die Erfindung ebenfalls, mit den gleichen Vorteilen, verwendet werden.

Das Ventil-Ausgangsglied kann als Antriebsritzel oder als Kugelgewindespindel ausgebildet sein, abhängig von der Verwendung bei Zahnstangen- oder Kugelmutter-Hilfskraftlenkungen.

Ein solches Drehschieberventil ist in der DE 41 08 597 A1 beschrieben.
Das Drehschieberventil ist so ausgebildet, daß die Eingriffsmaße der Mitnahmeverbindung ausreichend groß sind, um einen festen Sitz zu gewährleisten, ohne daß daraus ein großformatiger Ventilzusammenbau resultiert. Der Mitnahmestift, der rechtwinklig von einem Außenumfang der Ritzelwelle absteht, wird in ein Stiftloch eingesetzt, das sich in radialer Richtung der Ventilbüchse erstreckt. Dadurch steht die Ritzelwelle mit der Ventilbüchse in Wirkverbindung. Die Mittelachse des inneren Durchmessers der Ventilbüchse schneidet die Mittelachse des Stiftloches und ist von der Mittelachse der Ventilzusammenbaugruppe in Richtung der Seite der Ventilzusammenbaugruppe verschoben, die dem Stiftloch gegenüberliegt.

Das dokument DE 43 10 396 A1 beschreibt auch ein Drehschieberventil für Hilftkraftlenkungen für Kraftfahrzeug gemäß dem oberbegriff des Anspruchs 1.

Der vorliegenden Erfindung liegt die Aufgabe zugrunde ein Drehschieberventil darzustellen, bei dem das Spiel zwischen Ventil-Eingangsglied und Ventil-Ausgangsglied eliminiert wird und trotzdem eine Winkel- und Längsbeweglichkeit zwischen einem als Steuerbuchse ausgebildeten Ventilelement und einem als Antriebsritzel ausgebildeten Ventil-Ausgangsgliedes erhalten bleibt, um einen lateralen Fehlerausgleich zu ermöglichen.

Die der Erfindung zugrundeliegende Aufgabe wird durch ein, auch die kennzeichnenden Merkmale des Hauptanspruchs aufweisendes, gattungsgemäßes Drehschieberventil gelöst.

Die Anbindung der Steuerbuchse an das Antriebsritzel erfolgt mittels einer toleranzunempfindlichen und spielfreien Preßverbindung in Form eines Verbindungselementes. Das Verbindungselement kann einstückig mit der Steuerbuchse verbunden sein, oder aber durch Umformen, Fügen mit der Steuerbuchse gekoppelt werden.
Die Steuerbuchse bzw. das Verbindungselement kann im Verbindungsbereich als Vollwelle, Hohlwelle oder als Polygon ausgebildet sein.
Das Verbindungselement kann ein Profil, z. B. in Form von am Umfang befindlichen Nocken, aufweisen, daß sowohl auf der Steuerbuchse, als auch in dem Antriebsritzel angebracht werden kann. Es muß lediglich eine toleranzunempfindliche, zentrische und spielfreie Verbindung der beiden Teile gewährleistet werden.

Durch eine flexible Gestaltung eines Bereichs zwischen einem Verbindungsbereich von Steuerbuchse und Antriebsritzel und einem Steuerbereich der Steuerbuchse können von außen einwirkende Querkräfte gleichmäßig verteilt und die beiden Teile somit spielfrei zueinander fixiert werden. Dadurch können vorhandene laterale und angulare Fehler so ausgeglichen werden, daß es zu keinen Verspannungen innerhalb des Drehschieberventils kommt.
Die Flexibilität des Bereichs zwischen einem Verbindungsbereich von Steuerbuchse und Antriebsritzel und einem Steuerbereich der Steuerbuchse erfolgt durch Einbringen von mindestens einem Schnitt und wird durch dessen Schnittbreite, -tiefe und -länge sowie durch die Anordnung und Dichte der Schnitte beeinflußt.
Das Einbringen der Schnitte erfolgt durch Energiestrahlschneiden, Plasmaschneiden, Erosionsschneiden, Stanzen, Schleifen oder Fräsen.

Von außen einwirkende Kräfte, wie Verspannungen in der Lenksäule, elastische Einflüsse oder unterschiedliche Wärmedehnungen der einzelnen Bauteile zueinander, die die Funktion bei den bisherigen Drehschieberventilen nachteilig beeinflussen, werden vermieden. Auch können Fertigungstoleranzen, hinsichtlich ihrer Einflüsse auf die Funktion der Drehschieberventile, ausgeglichen werden.
Die Montage erfolgt lediglich durch axiales Zusammenfügen; hierdurch ergeben sich Vorteile hinsichtlich Herstellungsund Montageaufwand.
Die Montage kann auch vollautomatisch mit Hilfe einer Kraft-Weg-Überwachung erfolgen, was zu einer höheren Reproduzierbarkeit von Qualität und Funktion führt.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

Nachfolgend ist anhand der Figuren ein Ausführungsbeispiel der vorliegenden Erfindung prinzipgemäß beschrieben.
Es zeigen:

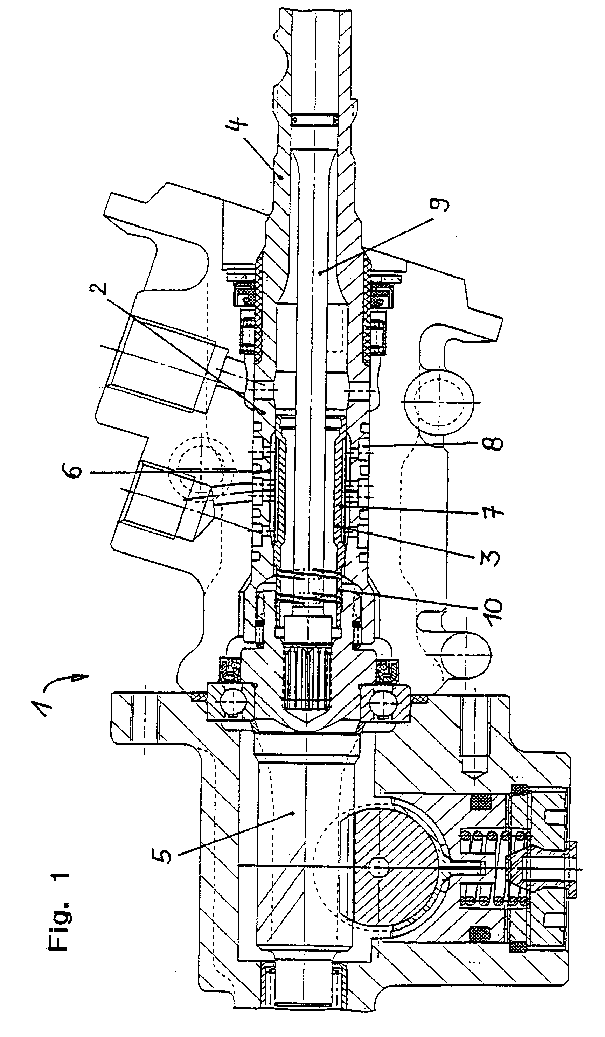

- Fig. 1: einen Längsschnitt durch ein erfindungsgemäßes Drehschieberventil am Beispiel einer Zahnstangen-Hilfskraftlenkung von Kraftfahrzeugen;

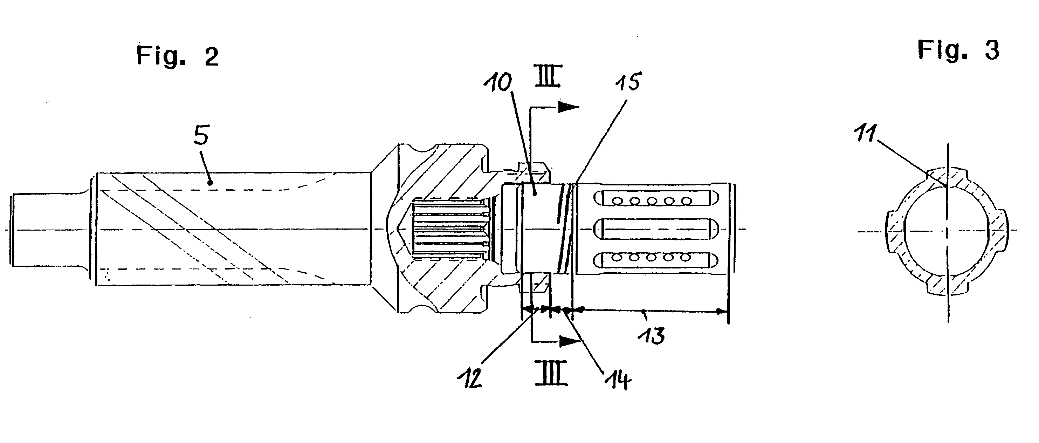

- Fig. 2: einen Teilausschnitt eines erfindungsgemäßen Drehschieberventil in vergrößertem Maßstab und
- Fig. 3: einen Schnitt entlang der Linie III-III des in Fig. 2 dargestellten Teilausschnitts eines erfindungsgemäßen Drehschieberventils.

Die Erfindung wird anhand des Beispieles eines Drehschieberventils für Zahnstangen-Hilfskraftlenkungen beschrieben. Mit gleicher Wirkung kann die Erfindung jedoch auch bei anderen Hilfskraftlenkungen, beispielsweise bei Kugelmutter-Hilfskraftlenkungen, angewendet werden.

Ein erfindungsgemäßes Drehschieberventil 1 enthält ein erstes Ventilelement in Form eines Drehschiebers 2 und ein zweites Ventilelement, das als Steuerbuchse 3 ausgebildet ist.
Der Drehschieber 2 ist mit einem Ventil-Eingangsglied 4 drehfest verbunden, welches als Lenkspindelanschluß ausgestaltet sein kann. Der Lenkspindelanschluß ist beispielsweise mit einer nicht dargestellten Lenkspindel, die ein Lenkhandrad trägt, über ein ebenfalls nicht dargestelltes Kreuzgelenk verbunden. Der Drehschieber 2 ist zudem über eine nicht dargestellte Totgangkupplung mit einem Ventil-Ausgangsglied 5 verbunden.
Das Ventil-Ausgangsglied 5 kann als Antriebsritzel oder als Kugelgewindespindel ausgebildet sein, abhängig von der Verwendung bei Zahnstangen- oder Kugelmutter-Hilfskraftlenkungen.

An der äußeren Mantelfläche des Drehschiebers 2 sind Steuerlängsnuten 6 angeordnet, die mit Steuerlängsnuten 7 der Steuerbuchse 3 zusammenwirken.
Das Drehschieberventil 1 stellt, je nach Drehrichtung, eine Druckmittelverbindung über die Steuerlängsnuten 6 und 7 sowie über Ringnuten 8 in der Steuerbuchse 3 zu einem nicht dargestellten Servomotor dar.

Das Ventil-Eingangsglied 4 ist zudem über eine Drehstabfeder 9 mit dem Ventil-Ausgangsglied 5 verbunden. Das Ventil-Ausgangsglied 5 seinerseits ist über ein Verbindungselement 10 drehfest mit der Steuerbuchse 3 verbunden. Durch diese verschiedenen Verbindungen untereinander ist eine begrenzte, relative Verdrehung des Drehschiebers 2 zur Steuerbuchse 3 möglich. Durch diese relative Verdrehung der Ventilelemente zueinander wird das von einer nicht dargestellten Servopumpe geförderte Druckmittel über einen gleichfalls nicht dargestellten Druckmittelbehälter von dem entlasteten in den belasteten Arbeitsraum des nicht dargestellten Servomotors geleitet.

Die Kopplung von Ventil-Ausgangsglied 5 und Steuerbuchse 3 wird auch durch ein Verbindungselement 10 bewerkstelligt, das hier einstückig mit der Steuerbuchse 3 verbunden ist. Das Verbindungselement 10 ist in das Ventil-Ausgangsglied 5 eingepresst und durch eine Nockenkontur 11 gegen Verdrehen gesichert. Dies ermöglicht eine spielfreie Mitnahme. Das Verbindungselement 10 in einem Verbindungsbereich 12 mit dem Ventil-Ausgangsglied 5 verbunden. Der Verbindungsbereich 12 ist durch einen Bereich 14 von einem Steuerbereich 13 der Steuerbuchse 3 räumlich getrennt.
In diesem Bereich 14 ist mindestens ein Schnitt 15 angebracht, der eine Torsionssteifigkeit und eine Biegeweichheit dieses Bereichs 14 garantiert.

### Bezugszeichen

- 1: Drehschieberventil
- 2: Drehschieber
- 3: Steuerbuchse
- 4: Ventil-Eingangsglied
- 5: Ventil-Ausgangsglied
- 6: Steuerlängsnuten (Drehschieber)
- 7: Steuerlängsnuten (Steuerbuchse)
- 8: Ringnuten
- 9: Drehstabfeder
- 10: Verbindungselement
- 11: Nockenkontur
- 12: Verbindungsbereich
- 13: Steuerbereich
- 14: Bereich
- 15: Schnitt

## Patentansprüche

1. Drehschieberventil (1) für Hilfskraftlenkungen von Kraftfahrzeugen, mit einem ersten Ventilelement, das mit einem Ventil-Eingangsglied (4) drehfest verbunden ist, mit einem zweiten Ventilelement, das mit einem Ventil-Ausgangsglied (5) drehfest verbunden ist, wobei das erste Ventilelement mit dem Ventil-Ausgangsglied (5) über eine Drehstabfeder (9) und über eine Totgangkupplung verbunden ist, die beiden Ventilelemente in einem Ventilgehäuse koaxial ineinander beweglich angeordnet sind und maximal um den Verdrehweg der Totgangkupplung relativ zueinander verdrehbar sind und das radial außenliegende Ventilelement innenliegende und das radial innenliegende Ventilelement außenliegende, wenigstens teilweise in ihrer axialen Länge begrenzte Steuerlängsnuten (6, 7), die auch zu Kennlinien-Justierzwecken konisch ausgebildet sein können, aufweisen, die miteinander zur Steuerung eines Druckmittels zu und von zwei Arbeitsräumen eines Servomotors zusammenwirken, **dadurch gekennzeichnet,daß** das erste Ventilelement auch über ein Verbindungselement (10) mit dem Ventil-Ausgangsglied (5) verbunden ist und in einem Bereich (14) zwischen einem Verbindungsbereich (12) und. einem Steuerbereich (13) mindestens einen Schnitt (15) aufweist.

2. Drehschieberventil (1) nach Anspruch 1, **dadurch gekennzeichnet, daß** die Verbindung beider Teile durch Form- und Kraftschluß verbunden sind, z. B. das Verbindungselement (10) oder das Ventil-Ausgangsglied 5 eine Nockenkontur (11) aufweist.

3. Drehschieberventil (1) nach Anspruch 1, **dadurch gekennzeichnet, daß** der Bereich (14) torsionssteif und biegeweich ist.

4. Drehschieberventil (1) nach Anspruch 1, **dadurch gekennzeichnet, daß** der Schnitt (15) durchgängig ist.

5. Drehschieberventil (1) nach Anspruch 1, **dadurch gekennzeichnet, daß** der Schnitt (15) in Form einer Nut ausgebildet ist.

6. Drehschieberventil (1) nach Anspruch 1, **dadurch gekennzeichnet, daß** der Bereich (14) als Hohlwelle ausgebildet ist.

7. Drehschieberventil (1) nach Anspruch 1, **dadurch gekennzeichnet, daß** der Bereich (14) als Vollwelle ausgebildet ist.

8. Drehschieberventil (1) nach Anspruch 1, **dadurch gekennzeichnet, daß** der Bereich (12) als Polygonprofil ausgebildet ist.

9. Drehschieberventil (1) nach Anspruch 1, **dadurch gekennzeichnet, daß** die Schnitte (15) mittels Energiestrahlschneiden, Plasmaschneiden, Erosionsschneiden, Stanzen, Schleifen oder Fräsen hergestellt sind.

10. Drehschieberventil (1) nach Anspruch 1, **dadurch gekennzeichnet, daß** das Verbindungselement (10) mindestens einstückig mit der Steuerbuchse (3) ausgebildet ist.

## Claims

1. Rotary slide valve (1) for power-assisted steering systems of motor vehicles, with a first valve element which is connected fixedly in terms of rotation to a valve input member (4) and with a second valve element which is connected fixedly in terms of rotation to a valve output member (5), the first valve element being connected to the valve output member (5) via a torsion-bar spring (9) and via a backlash clutch, the two valve elements being arranged in a valve housing so as to be movable coaxially one in the other and being rotatable relative to one another at most by the amount of the rotational travel of the backlash clutch, and the radially outer valve element having inner and the radially inner valve element outer longitudinal control grooves (6, 7) which are limited at least partially in their axial length and which may also be designed conically for the purposes of the adjustment of characteristic curves, the said longitudinal control grooves cooperating with one another in order to control a pressure medium to and from two working spaces of a servomotor, **characterized in that** the first valve element is also connected via a connection element (10) to the valve output member (5) and has at least one cut in a region (14) between a connection region (12) and a control region (13).

2. Rotary slide valve (1) according to Claim 1,
**characterized in that** the connection of the two parts is made by positive and non-positive connection, for example the connection element (10) of the valve output member (5) has a cam contour (11).

3. Rotary slide valve (1) according to Claim 1, **characterized in that** the region (14) is torsionally stiff and flexurally soft.

4. Rotary slide valve (1) according to Claim 1,
**characterized in that** the cut (15) passes through.

5. Rotary slide valve (1) according to Claim 1,
**characterized in that** the cut (15) is produced in the form of a groove.

6. Rotary slide valve (1) according to Claim 1,
**characterized in that** the region (14) is produced as a hollow shaft.

7. Rotary slide valve (1) according to Claim 1,
**characterized in that** the region (14) is produced as a solid shaft.

8. Rotary slide valve (1) according to Claim 1,
**characterized in that** the region (12) is produced as a polygonal profile.

9. Rotary slide valve (1) according to Claim 1,
**characterized in that** the cuts (15) are made by means of energy-beam cutting, plasma cutting, erosion cutting, punching, grinding or milling.

10. Rotary slide valve (1) according to Claim 1,
**characterized in that** the connection element (10) is produced at least in one piece with the control bush (3).

## Revendications

1. Soupape à tiroir rotatif (1) pour systèmes de direction assistée de véhicules à moteur, avec un premier élément de soupape, qui est assemblé sans rotation avec un organe d'entrée de soupape (4), avec un second élément de soupape, qui est assemblé sans rotation avec un organe de sortie de soupape (5), dans laquelle le premier élément de soupape est assemblé à l'organe de sortie de soupape (5) par un ressort à barre de torsion (9) et par un accouplement à course morte, les deux éléments de soupape sont disposés de façon mobile coaxialement l'un dans l'autre dans un boîtier de soupape et peuvent tourner l'un par rapport à l'autre au maximum de la course de rotation de l'accouplement à course morte, et l'élément de soupape situé radialement à l'extérieur et l'élément de soupape situé radialement à l'intérieur présentent des rainures longitudinales de commandé (6, 7) situées respectivement à l'intérieur et à l'extérieur, au moins partiellement limitées en longueur axiale, qui peuvent aussi être de forme conique en vue de l'ajustage de courbes caractéristiques, et qui coopèrent les unes avec les autres pour la commande d'un fluide sous pression envoyé vers et provenant de deux chambres de travail d'un servomoteur, **caractérisée en ce que** le premier élément de soupape est également assemblé à l'organe de sortie de soupape (5) par un élément d'assemblage (10) et présente au moins une coupe (15) dans une région (14) située entre une région d'assemblage (12) et une région de commande (13).

2. Soupape à tiroir rotatif (1) suivant la revendication 1, **caractérisée en ce que** l'assemblage des deux pièces est réalisé par emboîtement et serrage, par exemple l'élément d'assemblage (10) ou l'organe de sortie de soupape (5) présente un contour à cames (11).

3. Soupape à tiroir rotatif (1) suivant la revendication 1, **caractérisée en ce que** la région (14) est rigide en torsion et souple en flexion.

4. Soupape à tiroir rotatif (1) suivant la revendication 1, **caractérisée en ce que** la coupe (15) est continue.

5. Soupape à tiroir rotatif (1) suivant la revendication 1, **caractérisée en ce que** la coupe (15) est réalisée en forme de rainure.

6. Soupape à tiroir rotatif (1) suivant la revendication 1, **caractérisée en ce que** la région (14) a la forme d'un arbre creux.

7. Soupape à tiroir rotatif (1) suivant la revendication 1, **caractérisée en ce que** la région (14) a la forme d'un arbre plein.

8. Soupape à tiroir rotatif (1) suivant la revendication 1, **caractérisée en ce que** la région (12) a un profil de forme polygonale.

9. Soupape à tiroir rotatif (1) suivant la revendication 1, **caractérisée en ce que** les coupes (15) sont réalisées au moyen du découpage par faisceau d'énergie, découpage par plasma, découpage par érosion, estampage, meulage ou fraisage.

10. Soupape à tiroir rotatif (1) suivant la revendication 1, **caractérisée en ce que** l'élément d'assemblage (10) est formé au moins d'un seul tenant avec la douille de commande (3).
